# EUROPÄISCHE PATENTANMELDUNG

(11) **EP 1 391 890 A1**
(43) Veröffentlichungstag der Anmeldung: **25.02.2004**
(21) Anmeldenummer: 02018671.4
(22) Anmeldetag: 20.08.2002
(51) Int. Cl.: G11B 23/04

(54) **Multimedia-Zusatzvorrichtung**

(71) Anmelder: Scheidewig, Bodo, 60435 Frankfurt (DE)
(72) Erfinder: Scheidewig, Bodo, 60435 Frankfurt (DE)
(74) Vertreter: Freiherr von Gravenreuth, Günter, Dipl.-Ing. (FH)

(57) **Zusammenfassung**

Die Erfindung betrifft eine Multimedia-Zusatzvorrichtung, welche in ihren äußeren Abmessungen im wesentlichen baugleich mit einer Magnetband-Kassette ist, in der Mitte einer ihrer Längsseiten ein Interface besitzt, welches zum Austausch von analogen/oder digitalen Daten mit dem Schreib-/Lesekopf des Magnetbandgerätes geeignet und bestimmt ist, wobei, dass die Zusatzvorrichtung in ihrem Inneren eine Leiterplatte besitzt, dass auf der Leiterplatte eine Steuerelektronik angeordnet ist, welche mit dem Interface und mindestens einer Schnittstelle verbunden ist.

## Beschreibung

Die Erfindung betrifft eine Multimedia Zusatzvorrichtung.

Magnetbandkassetten beispielsweise Musik- oder Videokassetten sind standardisiert. Sie bestehen aus einer flachen, im wesentlichen rechteckigen Kunststoffbox. In dieser Kunststoffbox befinden sich zwei schwimmend gelagerte Spulen zum Aufnehmen eines Tonbands. In dem mittleren Bereich einer Längsseite der Musikkassette tritt das Tonband aus der Musikkassette aus, sodass ein Zugriff des Tonkopfs auf das Tonband möglich ist. Der Zugriff des Tonkopfs erfolgt relativ exakt in der Mitte der Musikkassette.

Wenn eine derartige Musikkassette in den Schacht eines Kassettenrecorders, beispielsweise eines Kassettenrecorders in einem Autoradio eingeschoben wird, dann wird durch mechanische Elemente der Tonkopf von seiner Ruheposition herausgefahren, sodass er auf dem Tonband zu liegen kommt. Gleichzeitig greifen geeignete Bewegungselemente in die Spulen des Tonbands, sodass dieses aufgespult werden kann. Das Tonband hat im Regelfall in jeder Bewegungsrichtung mindestens eine Tonspur. Die in der betreffenden Bewegungsrichtung aufwickelnde Spule wird hierbei vom Musikkassettenrecorder angetrieben. Die jeweils abwickelnde Spule läuft hierbei leer mit.

Die Steuerbefehle erfolgen hierbei im Regelfall über das Tastenfeld des Musikrecorders, beziehungsweise das Tastenfeld des Musikrecorderteils des Autoradios. Es sind jedoch auch Systeme bekannt, bei denen die Steuerbefehle von einer anderen Stelle, beispielsweise durch einen in unmittelbarer Nähe des Kfz.-Lenkrads angeordneten Dreh- und/oder Wipp- bzw. Tippschalter betätigt werden.

Bekannt sind ferner Zusatzvorrichtungen für derart gattungsgemäße Kassettenrecorder, mit deren Hilfe externe CD-Player an diese Kassettenrecorder angeschlossen werden können. Derartige Zusatzvorrichtungen sind von ihren Abmessungen her weitgehend baugleich mit einer Musikkassette. Sie wird wie eine Musikkassette in den Schacht des Kassettenrecorders eingeführt. Wenn diese Zusatzvorrichtung in den Schacht des gattungsgemäßen Kassettenrecorders eingeführt ist, kommt der Tonkopf des Kassettenrecorders auf einem entsprechenden Gegenstück (Interface) zum Liegen, sodass eine Signalübertragung möglich ist. Das entsprechende Gegenstück ist mit einem elektrischen Kabel verbunden, welches aus der Zusatzvorrichtung herausgeführt und im Regelfall an dem Lautsprecherausgang des externen CD-Players angeschlossen wird. Vom CD-Player kommende Tonsignale werden so auf den Tonkopf des Kassettenrecorders und somit letztlich auf dessen Verstärker- und Tonausgabesystem (Lautsprecherboxen) übertragen. Auf diese Weise besteht die Möglichkeit, Musik-CDs über die Lautsprecheranlage eines Kraftfahrzeugs anzuhören, dessen Autoradio nur über ein Kassettenteil verfügt. Derartige Zusatzvorrichtungen verfügen weder über eine Intelligenz, noch über eine eigene Speicherkapazität.

Selbiges gilt auch für das Diskettenlaufwerk von Computern, insbesondere von Laptops. Der Datenträger einer Diskette ist in technischer Hinsicht vergleichbar mit einem Magnetband einer Musikkassette. Der Schreib-/Lesekopf eines Diskettenlaufwerks entspricht in technischer Hinsicht dem Tonkopf eines Kassettenrecorders. Der Datenträger einer Diskette wird im Diskettenlaufwerk durch einen geeigneten Antrieb in Rotation versetzt. Computer haben üblicherweise einen eingebauten Lautsprecher, bzw. sind mit teilweise hochwertigen HiFi-Lautsprechern über Soundkarten verbunden. Insoweit sind ähnliche Voraussetzungen gegeben, wie bei einem Kassettenrecorder.

Der Erfindung liegt die Aufgabe zugrunde, eine Zusatzvorrichtung für Kassettenrecorder insbesondere in Kraftfahrzeugen und/oder Diskettenlaufwerken von Computern zu schaffen, welche eine multimediale Anwendung ermöglicht.

Diese Aufgabe wird erfindungsgemäß durch die kennzeichnenden Teile der Ansprüche 1 und 2 gelöst.

Die Erfindung besteht aus einer Zusatzvorrichtung, welche im Wesentlichen baugleich mit einer Kassette oder Diskette ist, sodass sie in den Schacht eines Kassetten- bzw. Diskettenlaufwerks eingeführt werden kann.

Nach der ersten Lösung ist die Zusatzvorrichtung im Wesentlichen baugleich mit einer Magnetband-Kassette, beispielsweise einer Musik- oder Videokassette.

Die Verbindung mit dem Tonkopf erfolgt dann entsprechend der bei der Zusatzvorrichtung für CD-Player beschriebenen Weise. Mit der Zusatzvorrichtung kann ein Zusatzteil verbunden sein, welches außerhalb des Kassettenrecorders verbleibt, wenn die Zusatzvorrichtung in den Schacht des Kassettenrecorders eingeführt ist. Das Zusatzteil kann Bauteile aufnehmen, welche in der Zusatzvorrichtung keinen Platz mehr finden, bzw. aus anderen insbesondere funktionalen Gründen ausserhalb der Zusatzvorrichtung liegen sollen.

Bei der zweiten erfindungsgemäßen Lösung, bei der die Zusatzvorrichtung im Wesentlichen baugleich mit einer Diskette ist, erfolgt die Verbindung mit dem Schreib-/Lesekopf eines Computers in ähnlicher Weise wie bei der Kassette. Diese Zusatzvorrichtung besitzt keinen rotierenden Datenträger. Vielmehr ist an der Stelle, an der bei einer normalen Diskette der Schreib-/Lesekopf den Zugriff auf die eigentliche Diskette nimmt, eine Metallplatte angeordnet. Diese Metallplatte wird durch eine Induktionsspule in einer definierten Weise magnetisiert, so dass der auf ihr liegende Schreib-/Lesekopf ebenso wie bei einer Diskette diese Signale aufnehmen kann.

Es liegt auf der Hand, dass diese erfindungsgemäße Lösung nicht auf Zusatzvorrichtungen, welche im Wesentlichen baugleich mit Disketten sind, beschränkt ist. Vielmehr kann diese Art von Zusatzvorrichtung auch die Form und Abmessung einer beliebigen Wechselplatte haben, beispielsweise auch eine Platte, welche unter dem Handelsnamen "ZIP"-Laufwerk im Verkehr ist. In soweit wird die Erfindung nachfolgend nur beispielhaft anhand eines Diskettenlaufwerks beschrieben. Eine Beschränkung der Erfindung auf Zusatzvorrichtungen, welche im Wesentlichen baugleich mit einer Diskette sind, ist hiermit nicht verbunden.

Die erfindungsgemäße Zusatzvorrichtung für beide Lösungen verfügt mindestens über
a)
   eine Festplatte und/oder einen Festspeicher,
b)
   eine Steuereinheit zur Steuerung dieser Festplatte und/oder zur Verwaltung des Festspeichers und zur bestimmungsgemäßen Datenverarbeitung von Daten, welche von der Festplatte und/oder von einer externen Eingabe kommen und
c)
   einer Stromversorgung.

Als Festspeicher können handelsübliche Speicher-Chips, wie sie beispielsweise im Hauptspeicher eines Computers zur Anwendung gelangen, verwendet werden. Die Verwendung von einem Festspeicher bietet sich insbesondere dort an, wo nicht so große Datenmengen anfallen, dass eine Festplatte erforderlich wäre. Die Verwendung von Speicher-Chips hat den Vorteil, dass
a) die Zugriffzeiten wesentlich kürzer sind als bei einer Festplatte und
b) der Stromverbrauch deutlich geringer ist.

In erfindungsgemäßer Weise können daher auch Festplatte und Festspeicher miteinander kombiniert, in einer Zusatzvorrichtung vorhanden sein.

Die Stromversorgung dient zur Versorgung des Antriebs der Festplatte, sowie für die Stromversorgung der Steuereinheit und der Schnittstellen.

Die Stromversorgung der Zusatzvorrichtung erfolgt vorzugsweise über den Zigarettenanzünder des Kraftfahrzeugs bzw. über die Steckdose die bei Computern häufig angeordnet ist.

Erfindungsgemäßerweise ist jedoch auch ein fest verkabelter Anschluss möglich, wobei zumindest ein Teil dieses Kabels so flexibel gestaltet ist, dass die Zusatzvorrichtung in den Kassettenrekorder bzw. Computer eingelegt und wieder entfernt werden kann.

Die Stromversorgung der Zusatzvorrichtung kann jedoch auch über eine oder mehrere Batterien, insbesondere Knopfzellen oder einen Akkumulator erfolgen. Zum Laden des Akkumulators kann die Zusatzvorrichtung - wie beispielsweise ein Handy - in eine Ladestation gesteckt werden. Zu diesem Zweck sind Kontakte für den Ladestrom an der Außenseite der Zusatzvorrichtung geführt.

Der Antrieb der Rollen der Kassette bzw. der Magnetscheibe in einer Diskette kann ferner in erfindungsgemäßer Weise dahingehend genutzt werden, dass in der Zusatzvorrichtung ein Generator enthalten ist, welcher zur Stromversorgung der Zusatzvorrichtung und/oder zur Aufladung seiner Akkmulatoren genutzt wird.

Die Befehlseingabe für die Zusatzvorrichtung erfolgt entweder über ein Tastaturfeld des Zusatzteils oder über eine externe Tastatur. Die externe Tastatur kann mit dem Zusatzgerät über ein Kabel oder eine geeignete kabellose Strecke, beispielsweise über Infrarotschnittstellen oder eine Funkstrecke verbunden sein.

Soweit sich diese Zusatzvorrichtung in einem Fahrzeug befindet, können über die Schnittstelle(n) auch Fahrzeugdaten wie Geschwindigkeit, Kraftstoffverbrauch in die Zusatzvorrichtung automatisch eingegeben werden. Diese Fahrzeugdaten kommen dann beispielsweise von der Bordelektronik oder dem Bordcomputer. Auch ist in erfindungsgemäßer Weise ein Datenaustausch zwischen der Zusatzvorrichtung und der Bordelektronik oder dem Bordcomputer möglich.

In vorteilhafter Weise kann an dem Zusatzteil ein Flachbildschirm angeordnet sein. Sofern der Flachbildschirm nicht unmittelbar an dem Zusatzteil angeordnet ist, kann es über eine Kabel- oder kabellose Verbindung, wie beispielsweise eine weitere Infrarot- oder Funkstrecke an einer beliebigen anderen Stelle des Kraftfahrzeuges angeordnet sein.

In der Zusatzvorrichtung im Zusatzteil und/oder in dem Flachbildschirm kann eine Antenne angeordnet sein. Diese Antenne kann zum unmittelbaren Empfang bestimmt sein oder Teil einer Funkstrecke zu einer Klebeantenne an einem Fenster des Kraftfahrzeuges sein.

Eine derart ausgestaltete Zusatzvorrichtung ist für eine multimediale Anwendung geeignet.

Auf der Festplatte oder im Festspeicher können Dateien aller Art, insbesondere beliebige Musik-, Sprach- und/oder Bilddateien gespeichert werden. Bei reinen Tondateien, beispielsweise Musikdateien, kann es sich hierbei um überspielte Musik-CD's oder Dateien beispielsweise im MP3-Format handeln. Auf diese Festplatte können jedoch auch (nach einem vorangeschalteten Analog-Digital-Wandler) Video-Kassetten oder DVD-Dateien gespeichert werden, sodass auf dem Flachbildschirm eine Filmausgabe und zeitgleich über die Lautsprecheranlage eine Tonausgabe möglich ist. Über die vorgenannte Antennenanlage können (analoge oder digitale) Video-Signale empfangen werden, sodass der Flachbildschirm als Fernsehbildschirm dienen kann, sofern die Zusatzvorrichtung die für einen Fernseh- oder Radioempfang erforderlichen Bauteile besitzt.

Der Flachbildschirm kann jedoch bei der Lösung, bei welcher die Zusatzvorrichtung im Wesentlichen baugleich mit einer Musikkassette ist, auch die Funktion von Handheld-Computer, wie sie unter den Handelsnamen "Palm" bzw. "Vision" im Verkehr sind, verwendet werden. Derartige Handheld-Computer haben einen eigenen Arbeitsspeicher. Dieser kann, soweit er nicht für Funktionen des Handheld-Computers benötigt wird, den Festspeicher und/oder die Festplatte der Zusatzvorrichtung für Kassettenrecorder in Kraftfahrzeugen ergänzen. Die Festplatte ist insoweit dann die zugehörige Datenfestplatte.

Auf die Festplatte oder in dem Festspeicher kann auch die CD eines Routenplaners überspielt werden. Die handelsüblichen CDs von Routenplanern haben häufig auch die jeweils exakten geodätischen Daten. Man kann also einen Start- und einen Zielort ermitteln, sodass der Routenplaner anschließend die Fahrtroute berechnet. Die Ausgabe der Fahrtroute kann entweder auf den Bildschirm und/oder (sofern die CD dies vorgesehen hat) über die Autolautsprecher des Kraftfahrzeugs erfolgen. In diesem Anwendungsfall ist es besonders vorteilhaft, dass in erfindungsgemäßer Weise ein Datenaustausch zwischen der Zusatzvorrichtung und der Bordelektronik oder dem Bordcomputer möglich ist.

In erfindungsgemäßer Weise kann dieses Routenplanersystem auch Global-Position-System (GPS) verbunden sein, sodass die exakte Position des Fahrzeugs feststellbar ist. Diese Position wird dann - wie bei Routenplanern üblich - mit der auf der Festplatte oder im Festspeicher kopierten CD-ROM abgearbeitet.

In erfindungsgemäßer Weise kann es sich hierbei um ein externes GPS-System handeln, welches mit der Zusatzvorrichtung über ein Verbindungskabel die Daten austauscht. Das GPS-System kann jedoch auch in erfindungsgemäßer Weise in der Zusatzvorrichtung integriert sein.

Die Zusatzvorrichtung für Kassettenrecorder in Kraftfahrzeugen kann in erfindungsgemäßer Weise auch die elektronischen Bauteile eines Handys besitzen, sodass die Lautsprecheranlage des Kraftfahrzeugs als der Lautsprecherteil einer Freisprechanlage dient. Hierzu ist es jedoch erforderlich, dass vorzugsweise am Zusatzteil oder am Display ein Mikrofon zur Sprachaufnahme angeordnet ist.

Die Erfindung ist nicht auf Landfahrzeuge beschränkt, sie kann auch in Wasser- und Luftfahrzeugen zur Anwendung kommen.

Die Zusatzvorrichtung welche im Wesentlichen baugleich mit einer Diskette ist, kann in erfindungsgemäßer Weise ebenfalls die elektronischen Bauteile eines Handys besitzen, sodass die Lautsprecheranlage eines Computers als Freisprechanlage dient. Hierzu ist es jedoch erforderlich, dass vorzugsweise am Zusatzteil oder am Computer ein Mikrofon zur Sprachaufnahme angeordnet ist. Wenn zusätzlich eine Digitalkamera vorgesehen ist, kann über das Telefonnetz des Handys eine "Video"- Konferenz geführt werden. Die Bandbreiten der Telefonnetze von Handys sind üblicherweise (zumindest noch) hierfür besser geeignet als die paketorientierte Datenübermittlung über das Internet.

In erfindungsgemäßer Weise muss die Zusatzvorrichtung keinesfalls alle vorgenannten Elemente umfassen. Sie kann modular aufgebaut sein, so dass nur ein oder mehrere der vorgenannten Elemente vorgesehen sind. In der maximalen multimedialen Anwendung ermöglicht somit diese erfindungsgemäße Zusatzvorrichtung die Integration folgender ansonsten separat vorgesehener Elemente in einem Gerät:
a) Fernseher,
b) Ton- und Bildwiedergabe von vorher von einem Videorecorder oder einer DVD überspielten Datei,
c) Die Funktionen eines Handy's mit Freisprechanlage,
d) die Funktionen eines Computers einschließlich des Internetzugangs,
e) die Funktionen eines Navigationssystems.

Weitere Merkmale und Vorteile der vorliegenden Erfindung ergeben sich aus den Ausführungsbeispielen in Verbindung mit der Zeichnung. Hierbei zeigt
- Figur 1: eine erfindungsgemäße Zusatzvorrichtung,
- Figur 1a: eine Abwandlung einer erfindungsgemäßen Zusatzvorrichtung gemäß Figur 1,
- Figur 2: eine weitere Abwandlung einer erfindungsgemäßen Zusatzvorrichtung gemäß Figur 1,
- Figur 2a: eine weitere Abwandlung einer erfindungsgemäßen Zusatzvorrichtung gemäß Figur 2,

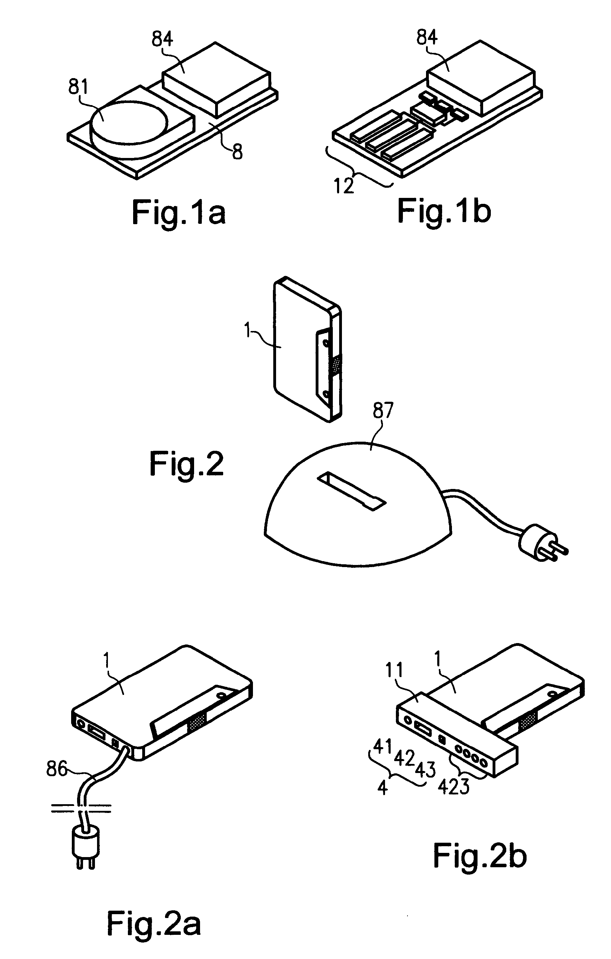

- Figur 2a: eine weitere Abwandlung einer erfindungsgemäßen Zusatzvorrichtung gemäß Figur 2a,

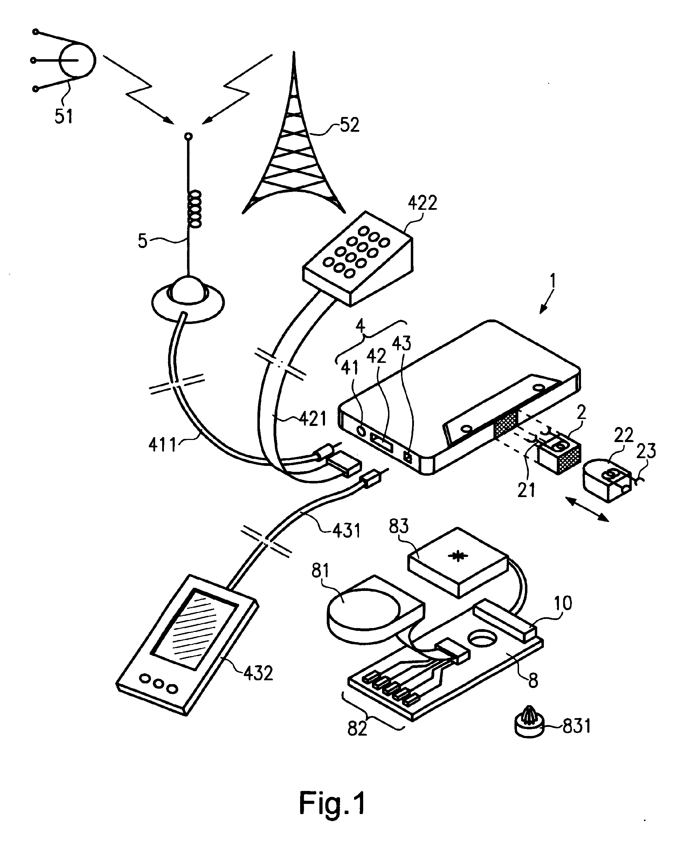

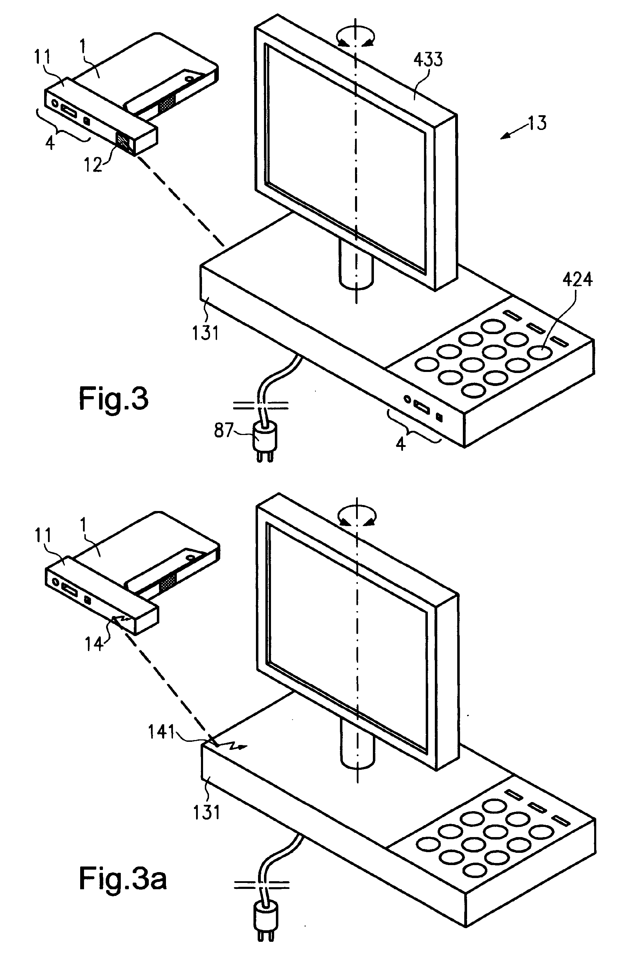

- Figur 3: eine weitere Abwandlung einer erfindungsgemäßen Zusatzvorrichtung gemäß Figur 1,
- Figur 3 a: eine weitere Abwandlung einer erfindungsgemäßen Zusatzvorrichtung gemäß Figur 3,

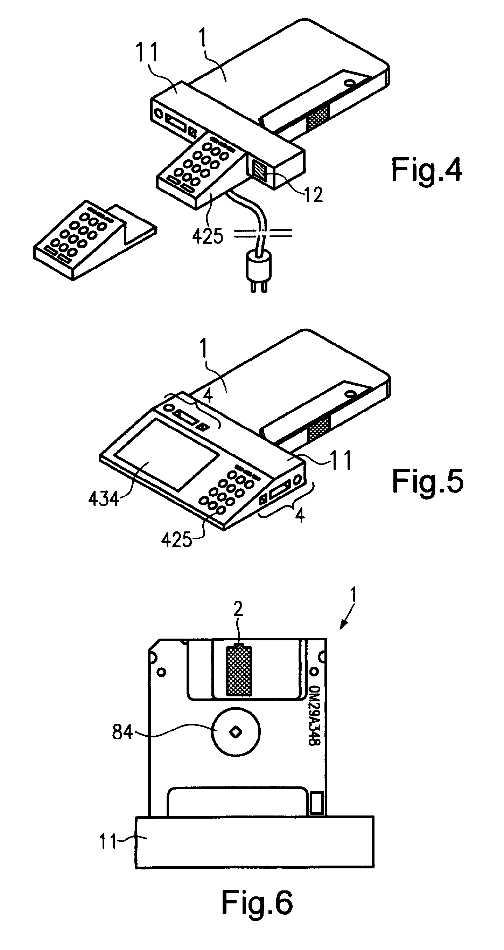

- Figur 4: eine weitere Abwandlung einer erfindungsgemäßen Zusatzvorrichtung gemäß Figur 1,
- Figur 5: eine weitere Abwandlung einer erfindungsgemäßen Zusatzvorrichtung gemäß Figur 4,

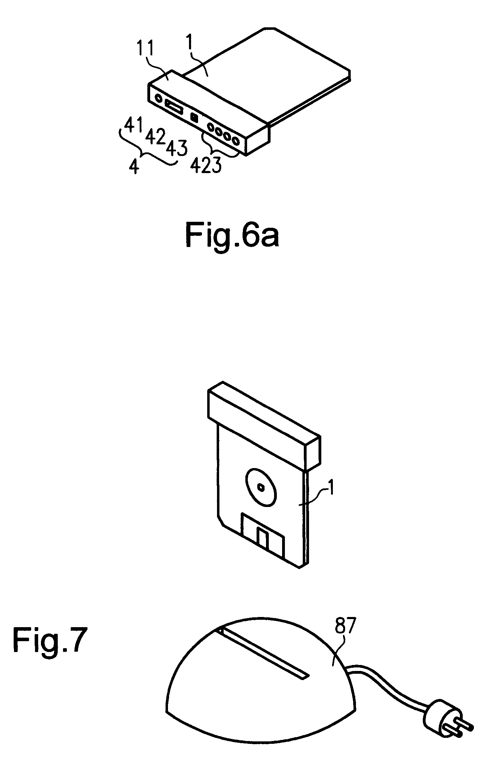

- Figur 6: eine Zusatzvorrichtung in einer anderen Ausführungsform. gemäß Figur 6
- Figur 6a: eine Zusatzvorrichtung gemäß Figur 6 in einer an deren Darstellung,

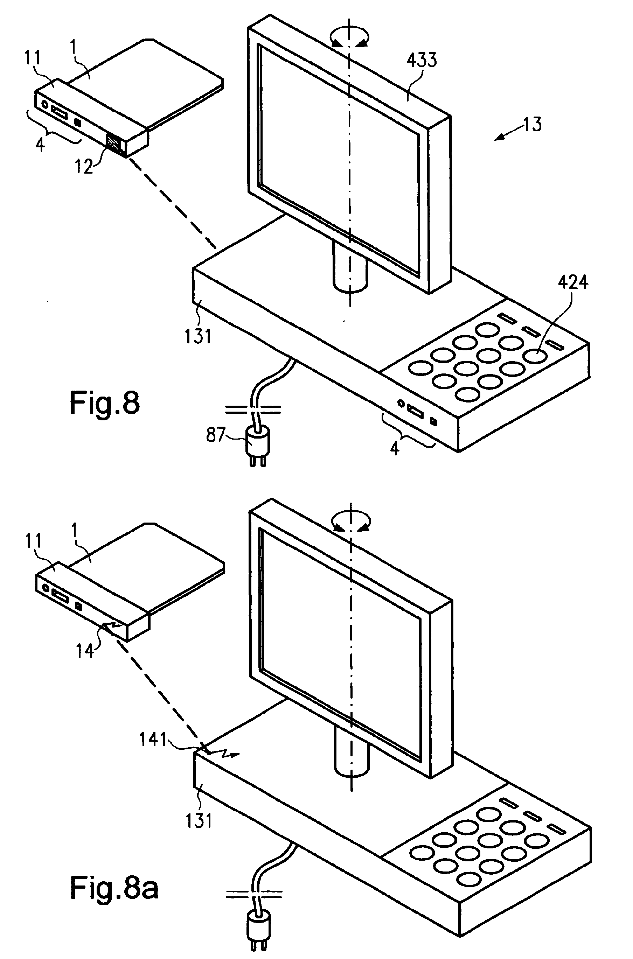

- Figur 7: eine Abwandlung einer erfindungsgemäßen Zusatzvorrichtung gemäß Figur 6,
- Figur 8: eine weitere Abwandlung einer erfindungsgemäßen Zusatzvorrichtung gemäß Figur 6,
- Figur 8a: eine weitere Abwandlung einer erfindungsgemäßen Zusatzvorrichtung gemäß Figur 8,

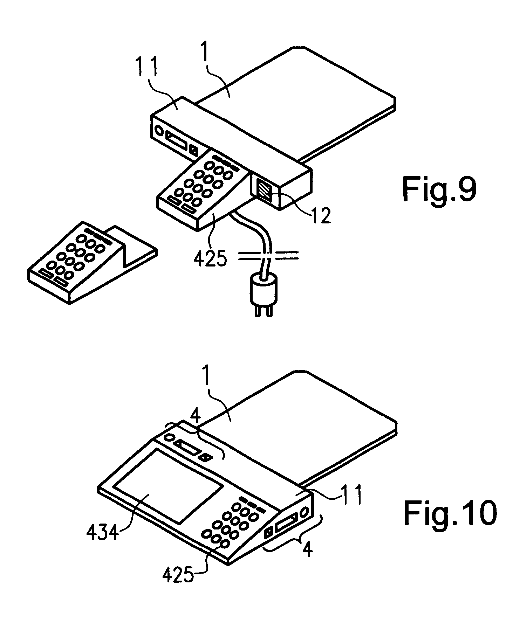

- Figur 9: eine weitere Abwandlung einer erfindungsgemäßen Zusatzvorrichtung gemäß Figur 6
- Figur 10: eine weitere Abwandlung einer erfindungsgemäßen Zusatzvorrichtung gemäß Figur 6

Figur 1 zeigt eine Zusatzvorrichtung 1. Diese Zusatzvorrichtung 1 besitzt in dieser Ausführungsform die geometrischen Abmessungen einer standardisierten Musikkassette.

In dem Bereich, in dem bei einer normalen Musikkassette das Tonband am Lesekopf des Kassettenrecorders vorbeigeführt wird, befindet sich in der Zusatzvorrichtung 1 ein Interface 2. An das Interface 2 dockt, wenn die Zusatzvorrichtung 1 in das Kassettenlaufwerk in üblicher Form eingeführt ist, der Schreib-/Lesekopf 22 des Kassettenrecorders (nicht dargestellt) an. Bei einer normalen Musikkassette nimmt der Schreib-/Lesekopf 22 beispielsweise über eine Induktionsschleife 23 die magnetischen Impulse des Tonbandes auf, welche dann über einen Verstärker, einem Rauschfilter etc. der Tonausgabe zugeführt werden (nicht dargestellt). Bei der erfindungsgemäßen Zusatzvorrichtung ist im Interface 2 ein Elektromagnet 21 vorgesehen. Wenn an dem Elektromagneten 21 eine modulierte Spannung anliegt, wird die Induktionsschleife 23 des Schreib-/Lesekopfs 22 angeregt, sodass auf diese Weise die in der modulierten Spannung entsprechende Signale von der Induktionsschleife 23 abgegriffen werden können.

An mindestens einer Stirnseite der Zusatzvorrichtung 1 befindet sich mindestens eine Schnittstelle 4. In diesem Ausführungsbeispiel ist es eine Koaxialsteckdose 41, beispielsweise für ein Antennenkabel 411, eine Flachsteckerdose 42 für ein Flachbandkabel 421, sowie eine serielle Schnittstelle 43 für ein serielles Kabel 431.

Das Antennenkabel 411 ist mit einer Antenne 5 verbunden, worüber Signale beispielhaft über Satelliten 51 und/oder einen Sendemasten 52 empfangen werden können. Diese Signale können Fernseh-, Radio-, Telekommunikationssignale, GPS-Signale oder sonstige Funksignale o. ä. sein.

Das Flachbandkabel 421 ist mit einer Tastatur 422 verbunden. Insoweit ist ein Parallelanschluss der Tastatur 422 an der Zusatzvorrichtung 1 möglich. Das Flachbandkabel 421 eignet sich doch nicht nur für Parallelanschlüsse, vielmehr können auch mehrere serielle Datenleitungen parallel zueinander zur Tastatur 422 geführt werden.

In diesem Ausführungsbeispiel ist an der seriellen Steckdose 43 über das serielle Kabel 431 ein Bildschirm 432 angeschlossen. Es liegt auf der Hand, dass auch der Bildschirm 432 über ein Flachbandkabel (nicht dargestellt) oder ein Koaxialkabel (nicht dargestellt) an der Zusatzvorrichtung 1 angeschlossen sein kann.

In der Zusatzvorrichtung 1 befindet sich eine Leiterplatte 8. Auf der Leiterplatte ist eine Festplatte 81 als Massenspeicher angeordnet. Auf der Leiterplatte 8 befindet sich ferner eine Steuerelektronik 82 (schematisch dargestellt) zur Steuerung der gesamten Zusatzvorrichtung 1.

In diesen Ausführungsbeispielen ist auf der Leiterplatte 8 ein Generator 83 angeordnet. Der Generator 83 wird über einen Motor 831 (nur schematisch dargestellt) angetrieben. Der Motor 831 ist Bestandteil des Kassettenrecorders und dient normalerweise dazu, das Tonband aufzuspulen. Da die Antriebsgeschwindigkeit des Motors 831 wohl für einen konstanten Bandantrieb ausgelegt ist, nicht dagegen für eine konstante Niederspannung, ist es vorteilhaft, wenn auf der Leiterplatte 8 ein Spannungsstabilisator und/ oder -teiler 832 angeordnet ist. Der von dem Generator 83 erzeugte Strom wird über den Spannungsstabilisator in eine definierte stabile Ausgangsspannung umgewandelt, dort gerichtet und gegebenenfalls in definierte unterschiedliche Einzelspannungen aufgeteilt. Hierüber erfolgt (nicht näher dargestellt) die Stromversorgung der Festplatte 81, der Steuerelektronik 82, der Tastatur 422 und des Bildschirms 432(soweit letztere nicht über eigenständige Stromversorgungen verfügen).

Figur 1a zeigt eine abgewandelte Form der Leiterplatte 8. In diesem Fall verfügt die Leiterplatte 8 nicht über einen Generator, sondern über einen Akkumulator 84. Über den Akkumulator 84 wird in vorbeschriebener Weise die Festplatte 81 und (nicht dargestellt) die Steuerelektronik, die Tastatur und der Bildschirm mit Strom versorgt.

Figur 1b zeigt eine Abwandlung der Ausführungsform gemäß Figur 1 oder Figur 1a. In diesem Fall sind an Stelle der Festplatte elektronische Speicherbausteine (RAM's) 85 vorgesehen. Diese Ausführungsform kann entweder über einen Generator (nicht dargestellt) oder über einen Akkumulator 84 betrieben werden. Bei einem Betrieb über einen Generator (nicht dargestellt) ist jedoch ein (von der Kapazität und daher auch von den Abmessungen her reduzierter) Akkumulator 84 erforderlich, damit der Speicherinhalt der elektronischen Speicherelemente 85 nicht verloren geht.

Figur 2 zeigt eine abgewandelte Form einer Zusatzvorrichtung 1 gemäß Figur 2. In diesem Ausführungsbeispiel hat die Zusatzvorrichtung 1 die zu den Fig. 1a und 1b beschriebenen Akkumulatoren 84(in Fig. 2a nicht dargestellt). Diese werden über ein externes Ladegerät 87 wieder aufgeladen. Der innere Aufbau der Zusatzvorrichtung 1 kann dem inneren Aufbau wie Figur 1 bis 1b beschrieben, entsprechen.

Figur 2a zeigt eine weitere abgewandelte Form einer Zusatzvorrichtung 1 gemäß der Figur 1. In diesem Ausführungsbeispiel hat die Zusatzvorrichtung 1 eine externe Stromversorgung 86, beispielhaft dargestellt anhand eines Anschlusses über den Zigarettenanzünder eines Fahrzeugs. Der innere Aufbau der Zusatzvorrichtung 1 kann dem inneren Aufbau wie Figur 1 bis 1b beschrieben, entsprechen.

Figur 2b zeigt eine weitere abgewandelte Form der Zusatzvorrichtung 1 gemäß der Figuren 1 bis 2a. In diesem Ausführungsbeispiel hat die Zusatzvorrichtung 1 ein Zusatzteil 11. In dem Zusatzteil 11 ist die Schnittstelle 4, bestehend aus der Koaxialsteckdose 41, einer seriellen Schnittstelle 43 und/oder einer Flachsteckerdose 43, enthalten. Ferner kann das Zusatzteil 11 ein Tastenfeld 423, funktional vergleichbar mit der Tastatur 422 in Figur 1, besitzen.

Figur 3 zeigt eine weitere Abwandlung der erfindungsgemäßen Zusatzvorrichtung 1. In dieser erfindungsgemäßen Ausführungsform befindet sich im Zusatzteil 11 eine Infrarotschnittstelle 12.

Über die Infrarotschnittstelle 12 ist eine Kommunikation mit einer externen Station 13 möglich. In diesem Ausführungsbeispiel besteht die externe Station 13 aus einem Basisteil 131. Das Basisteil 131 besitzt ein Tastenfeld 424. Auf dem Basisteil 131 ist ein Bildschirm 433 vorzugsweise drehbar angeordnet. In dieser Ausführungsform kann die in Figur 1 bereits näher beschriebene Schnittstelle 4 im Zusatzteil 11 und / oder im Basisteil 131 angeordnet sein.

Das Basisteil 131 kann über Batterien oder Akkumulatoren (nicht dargestellt) mit der erforderlichen elektrischen Energie versorgt werden. In Figur 3 ist zur Versorgung mit elektrischer Energie eine externe Stromversorgung 87 vorgesehen. Die externe Stromversorgung 87 kann ein Anschluss an den Zigarettenanzünder des Fahrzeugs (nicht dargestellt) sein.

Figur 3a zeigt eine weitere Abwandlung einer erfindungsgemäßen Zusatzvorrichtung 1 gemäß Figur 3. In diesem Ausführungsbeispiel ist in dem Zusatzteil 11 ein erstes Funkgerät 14 angeordnet. Das erste Funkgerät 14 (nur schematisch dargestellt) ist geeignet um bestimmt eine Funkverbindung mit einem zweiten Funkgerät 141 (nur schematisch dargestellt) im Basisteil 131 aufzubauen. In erfindungsgemäßer Weise können mehrere externe Stationen 13 (nicht dargestellt) vorhanden sein, sodass über die betreffenden Funkgeräte 14, 141 etc. ein lokales Computer- oder Telekommunikations-Netzwerk (LAN = local area network) aufgebaut werden kann.

Figur 4 zeigt eine weitere Abwandlung einer erfindungsgemäßen Zusatzvorrichtung 1 gemäß Figur 1. In dieser Ausführungsform ist an dem Zusatzteil 11 ein Tastenfeld 425 angebracht. Das Tastenfeld 425 kann in erfindungsgemäßer Weise abnehmbar sein.

Zusätzlich kann auch diese Ausführungsform eine Infrarot Schnittstelle 12 (oder ein erstes Funkgerät nicht dargestellt) entsprechend der Ausführungsform in Figur 3 oder 3b besitzen.

Figur 5 zeigt eine weitere Abwandlung einer erfindungsgemäßen Zusatzvorrichtung 1 gemäß Figur 4. In dieser Ausführungsform besitzt das Zusatzteil 11 nicht nur ein Tastenfeld 425, sondern auch einen integrierten Bildschirm 434. In dieser Ausführungsform können die in Figur 1 näher beschriebenen Schnittstellen 4 seitlich oder an der Oberseite des Zusatzteils 11 angeordnet sein.

Figur 6 zeigt eine Zusatzvorrichtung 1 in einer gänzlich anderen Ausführungsform. In diesem Fall hat die Zusatzvorrichtung 1 die Abmessungen einer Diskette und einen ähnlichen konstruktiven Aufbau. In dem Zusatzteil 1 befinden sich ebenfalls ein Generator 84, von dem in dieser Figur nur die mechanische Schnittstelle zum Antriebsmotor des Computers (nicht dargestellt) sichtbar ist. Insoweit erfolgt die Stromversorgung genauso, wie in Figur 1 mit der kassettenförmigen Ausführungsform dargestellt.

Diese Ausführungsform hat wohl die Abmessungen einer Diskette nicht jedoch deren inneren konstruktiven Aufbau. Anstelle der magnetisierbaren Scheibe ist ein Interface 2 vorgesehen, welches hinsichtlich seines konstruktiven Aufbaus identisch ist mit dem Interface 2 in Figur 1. Es besitzt also in seinem Inneren einen Elektromagneten (hier nicht dargestellt) welcher geeignet ist mit dem Lesekopf des Diskettenlaufwerks (nicht dargestellt) einen Datenaustausch zu tätigen.

In erfindungsgemäßer Weise besitzt auch die Zusatzvorrichtung 1 gemäß dieser Ausführungsform ein Zusatzteil 11.

Figur 6a zeigt eine Zusatzvorrichtung 1 gemäß Figur 6 aus einem andern Blickwinkel. In diesem Ausführungsbeispiel hat die Zusatzvorrichtung 1 ein Zusatzteil 11. In dem Zusatzteil 11 ist die Schnittstelle 4, bestehend aus der Koaxialsteckdose 41, einer seriellen Schnittstelle 43, und/oder einer Flachsteckerdose 43 enthalten. Ferner kann das Zusatzteil 11 ein Tastenfeld 423, funktional vergleichbar mit der Tastatur 422 in Figur 1, besitzen.

Figur 7 zeigt eine weitere abgewandelte Form einer Zusatzvorrichtung 1 gemäß Figur 6. In diesem Ausführungsbeispiel hat die Zusatzvorrichtung 1 die zu den Fig. 1a und 1b beschriebenen Akkumulatoren 84(in Fig. 7 nicht dargestellt). Diese werden über ein externes Ladegerät 87 wieder aufgeladen.

Figur 8 zeigt eine weitere Abwandlung einer erfindungsgemäßen Zusatzvorrichtung 1 gemäß Figur 6. In dieser erfindungsgemäßen Ausführungsform befindet sich im Zusatzteil 11 eine Infrarotschnittstelle 12.

Über die Infrarotschnittstelle 12 ist eine Kommunikation mit einer externen Station 13 möglich. In diesem Ausführungsbeispiel besteht die externe Station 13 aus einem Basisteil 131. Das Basisteil 131 besitzt ein Tastenfeld 424. Auf dem Basisteil 13 ist ein Bildschirm 433 vorzugsweise drehbar angeordnet. In dieser Ausführungsform kann die in Figur 1 bereits näher beschriebene Schnittstelle 4 im Zusatzteil 11 und / oder im Basisteil 131 angeordnet sein.

Das Basisteil 131 kann über Batterien oder Akkumulatoren (nicht dargestellt) mit der erforderlichen elektrischen Energie versorgt werden. In Figur 3 ist zur Versorgung mit elektrischer Energie eine externe Stromversorgung 87 vorgesehen. Die externe Stromversorgung 87 kann ein Anschluss an den Zigarettenanzünder des Fahrzeugs (nicht dargestellt) sein.

Figur 8a zeigt eine weitere Abwandlung einer erfindungsgemäßen Zusatzvorrichtung 1 gemäß Figur 3. In diesem Ausführungsbeispiel ist in dem Zusatzteil 11 ein erstes Funkgerät 14 angeordnet. Das erste Funkgerät 14 (nur schematisch dargestellt) ist geeignet um bestimmt eine Funkverbindung mit einem zweiten Funkgerät 141 (nur schematisch dargestellt) im Basisteil 131 aufzubauen. In erfindungsgemäßer Weise können mehrere externe Stationen 13 (nicht dargestellt) vorhanden sein, sodass über die betreffenden Funkgeräte 14, 141 etc . ein lokales Netzwerk (LAN = local area network) aufgebaut werden kann.

Figur 9 zeigt eine weitere Abwandlung einer erfindungsgemäßen Zusatzvorrichtung 1 gemäß Figur 1. In dieser Ausführungsform ist an dem Zusatzteil 11 ein Tastenfeld 425 angebracht. Das Tastenfeld 425 kann in erfindungsgemäßer Weise abnehmbar sein.

Zusätzlich kann auch diese Ausführungsform eine Infrarot Schnittstelle 12 (oder ein erstes Funkgerät / nicht dargestellt) entsprechend der Ausführungsform in Figur 3 oder 3b besitzen.

Figur 10 zeigt eine weitere Abwandlung einer erfindungsgemäßen Zusatzvorrichtung 1 gemäß Figur 6. In dieser Ausführungsform besitzt das Zusatzteil 11 nicht nur ein Tastenfeld 425, sondern auch einen integrierten Bildschirm 434. In dieser Ausführungsform können die in Figur 1 näher beschriebenen Schnittstellen 4 seitlich oder an der Oberseite des Zusatzteils 11 angeordnet sein.
Zusatzvorrichtung 1
Zusatzteil 11
Infrarotschnittstelle 12
externe Station 13
Basisteil 131
1. Funkgerät 14
2. Funkgerät 141
Interface 2
Elektromagnet 21
Schreib-/Lesekopf 22
Induktionsschleife 23

Schnittstelle 4
Koaxialsteckdose 41
Antennenkabel 411
Flachbandkabel 421
Flachsteckerdose 42
serielle Schnittstelle 43
serielles Kabel 431
Antenne 5
Satteliten 51
Sendemasten 52
Tastatur 422
Tastenfeld 423/424/425
Bildschirm 432/433/434

Leiterplatte 8
Festplatte 81
Steuerelektronik 82
Generator 83/84
Motor 831
Spannungsstabilisator und/oder -teiler 832
Akkumulator 84
elektronische Speicherbausteine 85
externe Stromversorgung 86/87
Ladegerät 87

## Patentansprüche

**1.** Multimedia-Zusatzvorrichtung, welche in ihren äußeren Abmessungen im wesentlichen baugleich mit einer Magnetband-Kassette ist, in der Mitte einer ihrer Längsseiten ein Interface besitzt, welches zum Austausch von analogen/oder digitalen Daten mit dem Schreib-/Lesekopf des Magnetbandgerätes geeignet und bestimmt ist, **dadurch gekennzeichnet, dass** die Zusatzvorrichtung (1) in ihrem Inneren eine Leiterplatte (8) besitzt, dass auf der Leiterplatte (8) eine Steuerelektronik (82) angeordnet ist, welche mit dem Interface (2) und mindestens einer Schnittstelle (4) verbunden ist.

**2.** Multimedia-Zusatzvorrichtung, welche in ihren äußeren Abmessungen im wesentlichen baugleich mit einem auswechselbarem Datenträger für Datenverarbeitungsgeräte ist, ein Interface besitzt, welches zum Austausch von analogen/oder digitalen Daten mit dem Schreib-/Lesekopf des Laufwerks des Datenverarbeitungsgeräte für den Datenträger geeignet und bestimmt ist, **dadurch gekennzeichnet, dass** die Zusatzvorrichtung (1) in ihrem Inneren eine Leiterplatte (8) besitzt, dass auf der Leiterplatte (8) eine Steuerelektronik (82) angeordnet ist, welche mit dem Interface (2) und mindestens einer Schnittstelle (4) verbunden ist.

**2.** Zusatzvorrichtung nach Anspruch 1 oder 2, **dadurch gekennzeichnet, dass** an einer Seite der Zusatzvorrichtung (1) ein Zusatzteil (11) angeordnet ist, wobei in dem Zusatzteil (11) mindestens eine Schnittstelle (4) angeordnet ist.

**3.** Zusatzvorrichtung nach Anspruch 1, **dadurch gekennzeichnet, dass** die Schnittstelle (4) an einer Schmalseite und/oder der dem Interface (2) gegenüberliegenden Längsseite angeordnet ist.

**4.** Zusatzvorrichtung nach Anspruch 3, **dadurch gekennzeichnet, dass** die Schnittstelle (4) mindestens eine Koaxialsteckdose (41) und/oder eine Flachsteckerdose (42) und/oder eine serielle Schnittstelle (43) ist.

**5.** Zusatzvorrichtung nach Anspruch 4, **dadurch gekennzeichnet, dass** die Flachsteckerdose (42) ein Parallelanschluss ist.

**6.** Zusatzvorrichtung nach ein oder mehreren der Ansprüche 1-5, **dadurch gekennzeichnet, dass** auf der Leiterplatte (8) ein Generator (83/84) angeordnet ist, welcher dann, wenn die Zusatzvorrichtung (1) in dem Magnetbandgerät bzw. in dem Laufwerk des Datenverarbeitungsgeräts sich in ihrer Endposition sich befindet, über einen Motor (831) des Magnetbandgerätes bzw. des Laufwerks des Datenverarbeitungsgeräts angetrieben wird, wobei der Generator (83/84) mit der Steuerelektronik (82) über elektrische Leiter verbunden ist.

**7.** Zusatzvorrichtung nach Anspruch 6, **dadurch gekennzeichnet, dass** zwischen dem Generator (83/84) und der Steuerelektronik (82) ein Spannungsstabilisator und/oder -teiler (832) angeordnet ist.

**8.** Zusatzvorrichtung nach Anspruch 4, **dadurch gekennzeichnet, dass** auf der Leiterplatte (8) ein Akkumulator (84) angeordnet ist, welcher über einen elektrischen Leiter mit der Steuerelektronik (82) verbunden ist.

**9.** Zusatzvorrichtung nach einem oder mehreren der Ansprüche 1-7, **dadurch gekennzeichnet, dass** auf der Leiterplatte (8) als Massenspeicher eine Festplatte (81) angeordnet ist, welche über elektrische Leiter mit der Steuerelektronik (82) verbunden ist.

**10.** Zusatzvorrichtung nach einem oder mehreren der Ansprüche 1-9, **dadurch gekennzeichnet, dass** auf der Leiterplatte (8) als Massenspeicher elektronische Speicherbausteine angeordnet sind, welche über elektrische Leiter mit der Steuerelektronik (82) verbunden sind.

**11.** Zusatzvorrichtung nach einem oder mehreren der Ansprüche 1-10, **dadurch gekennzeichnet, dass** an der Schnittstelle (4) ein Bildschirm (432/433/434) angeordnet ist.

**12.** Zusatzvorrichtung nach einem oder mehreren der Ansprüche 1-11, **dadurch gekennzeichnet, dass** an der Schnittstelle (4) eine Tastatur (422) angeordnet ist.

**13.** Zusatzvorrichtung nach einem oder mehreren der Ansprüche 1-12, **dadurch gekennzeichnet, dass** an der Schnittstelle 4) eine Antenne (5) angeordnet ist.

**14.** Zusatzvorrichtung nach einem oder mehreren der Ansprüche 1-13), **dadurch gekennzeichnet, dass** an einer Längs- und/oder Querseite elektrische Kontakte für ein externes Ladegerät (87) angeordnet sind.

**15.** Zusatzvorrichtung nach einem oder mehreren der Ansprüche 1-14, **dadurch gekennzeichnet, dass** eine externe Stromversorgung (86/87) über einen elektrischen Leiter vorgesehen ist.

**16.** Zusatzvorrichtung nach Anspruch 15, **dadurch gekennzeichnet, dass** in dem Zusatzteil (11) ein Tastenfeld (423) angeordnet ist.

**17.** Zusatzvorrichtung nach Anspruch 15, **dadurch gekennzeichnet, dass** in dem Zusatzteil (11) eine Infrarotschnittstelle (12) angeordnet ist, welche eine Verbindungsstrecke zu einer externen Station (13) besitzt, wobei die externe Station mindestens aus einem Basisteil (131) besteht.

**18.** Zusatzvorrichtung nach Anspruch 17, **dadurch gekennzeichnet, dass** im Basisteil (131) eine Tastatur (424) angeordnet ist.

**19.** Zusatzvorrichtung nach einem oder mehreren der Ansprüche 17-18, **dadurch gekennzeichnet, dass** in oder auf dem Basisteil (131) ein Bildschirm (433) angeordnet ist.

**20.** Zusatzvorrichtung nach einem oder mehreren der Ansprüche 17-19, **dadurch gekennzeichnet, dass** die externe Station (13) über einen elektrischen Leiter mit einer externen Stromversorgung (87) verbunden ist.

**21.** Zusatzvorrichtung nach einem oder mehreren der Ansprüche 16 und 18 bis 20, **dadurch gekennzeichnet, dass** in dem Zusatzteil (11) ein erstes Funkgerät (14) angeordnet ist, welches über eine Funkstrecke mit einem zweiten Funkgerät (141) im Basisteil (131) verbunden ist.

**22.** Zusatzvorrichtung nach einem oder mehreren der Ansprüche 1 bis 21, **dadurch gekennzeichnet, dass** an dem Zusatzteil (11) ein abnehmbares Tastenfeld (425) angeordnet ist.

**23.** Zusatzvorrichtung nach einem oder mehreren der Ansprüche 1 bis 16 **dadurch gekennzeichnet, dass** in dem Zusatzteil (11) ein Tastenfeld (425) und ein Bildschirm (434) angeordnet ist.
